# FASCICULE DE BREVET EUROPEEN

(11) **EP 1 841 577 B1**
(45) Date de publication et mention de la délivrance du brevet: **12.11.2008**
(21) Numéro de dépôt: 06709050.6
(22) Date de dépôt: 09.01.2006
(51) Int. Cl.: B29C 35/06

(54) **FOUR DE CUISSON A GAZ EN CONTINU NOTAMMENT DE PRODUITS EN CAOUTCHOUC**
GASBACKOFEN FÜR KAUTSCHUKPRODUKTE
GAS BAKING FURNACE FOR RUBBER PRODUCTS

(30) Priorité: 13.01.2005 FR 0500371
(43) Date de publication de la demande: 10.10.2007
(73) Titulaire: Establissements Paumelle, 76210 Bolbec (FR)
(72) Inventeur: PAUMELLE, Dominique, F-76210 Saint Eustache La Forêt (FR)
(74) Mandataire: Neyret, Daniel Jean Marie
(86) Numéro de dépôt international: PCT/FR2006/000036
(87) Numéro de publication internationale: WO 2006/075076

(56) Documents cités:
- EP-A- 1 216 129
- FR-A- 1 487 750
- GB-A- 1 390 559
- US-A- 3 351 329
- KLEIN H ET AL: "HERSTELLEN GROSSER KAUTSCHUK-BAHNEN IM EINFACH- UND DUBLIER- VERFAHREN" KAUTSCHUK UND GUMMI - KUNSTSTOFFE, HUTHIG, HEIDELBERG, DE, vol. 50, no. 1, janvier 1997 (1997-01), pages 25-33, XP000682049 ISSN: 0948-3276

## Description

La présente invention concerne les fours de cuisson et se rapporte notamment aux fours de cuisson de produits en caoutchouc.

On connaît des fours de cuisson électrique, dont le coût de construction est modéré mais dont le prix de revient de l'exploitation est élevé.

On connaît par ailleurs des fours de cuisson à gaz présentant une puissance consommée très importante et dont les inconvénients techniques sont les suivants :
- faible isolation entraînant une consommation inutile,
- évacuation des gaz de combustion dégagés par le brûleur à gaz au travers du courant de chauffe, entraînant des risques de pollution des produits à cuire,
- évacuation simultanée par tirage mécanique des vapeurs de cuisson dégagées par le produit et des gaz de combustion dégagés par la chauffe entraînant une surconsommation d'énergie ; ceci rend nécessaire d'évacuer une grande quantité d'air chaud pour extraire les gaz brûlés même si le produit ne dégage pas de vapeur de cuisson,
- veine d'air irrégulière sur la longueur du four entraînant une cuisson irrégulièrement répartie sur le produit pouvant provoquer des chocs thermiques,
- tirage mécanique dépendant simultanément ou séparément des vapeurs de cuisson et des gaz de combustion, rendant difficile la réalisation de réglages et l'optimisation de la cuisson.

Pour remédier à ces inconvénients, on a proposé une configuration de four, adaptée notamment mais pas exclusivement à la cuisson du caoutchouc en vue de sa vulcanisation, qui tout en étant d'un prix de revient d'exploitation inférieur aux fours connus présente un rendement amélioré et des facilités de réglage des paramètres de cuisson.

Ce four de cuisson de produits en caoutchouc comprend des moyens de chauffage à gaz.d'une zone de cuisson à travers laquelle le produit à traiter est déplacé. Il est formé de modules juxtaposés intégrés dans une ligne de fabrication comprenant chacun une enceinte convenablement isolée, un échangeur thermique à brûleur à gaz et des moyens de pulsion et d'acheminement de l'air chauffé par l'échangeur thermique vers une zone de cuisson du produit, le circuit de combustion du gaz de l'échangeur thermique étant séparé du circuit d'air chaud traversant la zone de cuisson. Les moyens d'acheminement de l'air chaud vers la zone de cuisson comprennent des trajets d'amenée de l'air chaud de deux côtés de la zone de cuisson et un trajet d'évacuation de l'air par le milieu de la zone de cuisson.

Ce four est décrit dans le document EP-A-1 216 129.

Lors de la vulcanisation du caoutchouc, des effluents gazeux polluants et toxiques sont produits, tels que des nitrosamines, du monoxyde de carbone et des oxydes d'azote. Il n'est, bien évidemment, pas souhaitable de les libérer dans l'atmosphère, soit pendant, soit après la vulcanisation des produits à traiter. Ces effluents doivent, au préalable, être traités dans une installation dédiée à cette fonction. Cette installation de traitement augmente sensiblement l'encombrement et le coût du four et de ses annexes.

Le but de l'invention est de proposer une modification du four de cuisson précédemment décrit qui, tout en lui conservant ses caractéristiques optimales du point de vue de la réalisation de la cuisson des produits à traiter, le rend également apte à réaliser un traitement des émissions polluantes dans d'excellentes conditions techniques et économiques.

A cet effet, l'invention a pour objet un four de cuisson à gaz en continu, notamment de produits en caoutchouc, comprenant des moyens de chauffage d'une zone de cuisson à travers laquelle le produit à traiter est déplacé, formé d'un module ou de plusieurs modules juxtaposés, intégrés au sein d'une ligne de fabrication et comprenant chacun une enceinte, convenablement isolée un échangeur thermique à brûleur à gaz et des moyens de propulsion et d'acheminement de l'air chauffé par l'échangeur thermique vers une zone de cuisson du produit, le circuit de combustion du gaz de l'échangeur thermique étant séparé du circuit d'air chaud traversant la zone de cuisson, les moyens d'acheminement de l'air chaud également répartis et diffusés par des grilles le long de la zone de cuisson comprenant des trajets d'amenée de l'air chaud de deux côtés de la zone de cuisson et un trajet d'évacuation de l'air par le milieu de la zone de cuisson, caractérisé en ce qu'il comporte également :
- des moyens pour assurer une pyrolyse des effluents gazeux présents dans le circuit d'air chaud et résultant de la cuisson du produit, lesdits moyens traitant une fraction des gaz circulant dans une section du four donnée ;
- et au moins un lit catalytique interposé sur le circuit d'air chaud.

Lesdits moyens pour assurer la pyrolyse des effluents gazeux résultant du produit peuvent comporter des moyens de réglage de ladite fraction des gaz traitée par pyrolyse.

L'échangeur thermique de chaque module de four peut être un échangeur à tube en épingle chauffé par l'intérieur à l'aide d'un brûleur à gaz correspondant, les moyens de propulsion et d'acheminement d'air chaud vers la zone de cuisson de chaque module peuvent comporter au moins une turbine de ventilation disposée près du fond de l'enceinte du module en regard de trajets d'acheminement de l'air chaud délimités par des tôles de déflexion de l'air chaud pour l'amener de part et d'autre de la zone de cuisson, et des grilles de répartition de l'air chaud le long de la zone de cuisson, et lesdits moyens pour assurer une pyrolyse desdits effluents gazeux peuvent comporter une enveloppe ouverte à ses deux extrémités entourant ledit tube en épingle, placée au voisinage de ladite turbine, séparée dudit tube par un intervalle et interrompue face à ladite turbine.

Ladite enveloppe peut être pourvue de moyens permettant de faire varier sa distance avec la turbine.

Ladite enveloppe peut être pourvue de moyens permettant de faire varier sa longueur.

Ledit lit catalytique peut être à base d'un ou plusieurs métaux précieux déposés sur un support minéral.

Comme on l'aura compris, l'invention consiste à interposer sur le trajet même des gaz qui sont en recirculation dans le four du type précédemment décrit :
- d'une part des moyens permettant de réaliser une pyrolyse des effluents gazeux aptes à être retraités ainsi, ladite pyrolyse utilisant comme source de chaleur l'échangeur thermique du four lui-même ;
- d'autre part au moins un lit catalytique apte à réaliser une catalyse des effluents gazeux aptes à être retraités ainsi, qu'ils aient été produits par la vulcanisation ou par la pyrolyse précédemment citée.

Dans une variante privilégiée de l'invention, le traitement des effluents gazeux par pyrolyse est obtenu par le fait que l'échangeur thermique est un échangeur en épingle, et qu'à proximité du ventilateur assurant la circulation des gaz dans le four, une branche de l'épingle est entourée par une enveloppe ouverte à ses deux extrémités qui assiste le passage d'une portion du gaz de recirculation à proximité immédiate de l'échangeur. La pyrolyse est ainsi réalisée à l'aide de moyens extrêmement simples et adaptables aisément à un four existant.

L'invention sera mieux comprise à la lecture de la description qui suit, donnée en référence aux figures annexées suivantes :
- la Fig.1 est un schéma de principe d'un exemple de four à gaz auquel l'invention peut être adaptée ;
- la Fig.2 est une vue en perspective avec arrachement partiel du four de la figure 1;
- la Fig.3 est une vue en perspective d'une portion d'un échangeur thermique en épingle du four des figures 1 et 2, équipée de moyens selon l'invention assurant une pyrolyse des gaz en circulation ;
- la Fig.4 est une vue en coupe suivant le plan 4-4 de la Fig.2.

La description qui va suivre concerne un exemple de mise en oeuvre de l'invention fondé sur une évolution du four décrit dans le document EP-A-1 216 129 déjà cité. Pour plus de détails concernant les caractéristiques et le fonctionnement de ce four on pourra utilement se reporter audit document. Mais il doit être compris que cet exemple précis de mise en oeuvre de l'invention n'est pas limitatif.

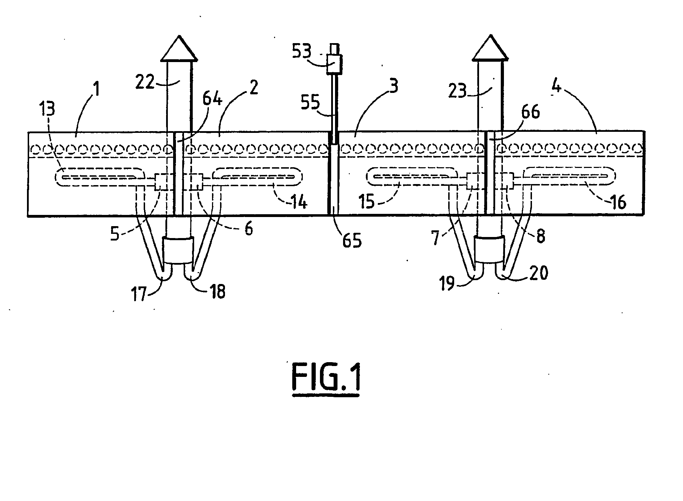

Le four représenté schématiquement à la figure 1 comporte plusieurs modules de four 1, 2, 3, 4 dont le nombre est fonction de la vitesse de défilement du produit à cuire, déterminée par la vitesse de la ligne de fabrication située en amont et le temps de séjour nécessaire au produit pour effectuer sa cuisson.

Les modules 1, 2, 3, 4 sont reliés entre eux par des moyens d'assemblage de leurs enceintes avec interposition de joints d'isolation thermique appropriés 64, 65, 66.

A chaque module 1 à 4 est associé un brûleur à gaz 5, 6, 7, 8 alimenté en gaz par une conduite d'alimentation 9, 10, 11, 12 et chauffant par l'intérieur un échangeur thermique en acier inoxydable 13, 14, 15, 16 formé d'un tube en épingle. Chaque brûleur produit, à partir d'un mélange air-gaz, une flamme allongée à l'intérieur du tube qui véhicule ensuite les produits de combustion sans aucun contact avec l'extérieur du tube. Les produits de combustion sont aspirés par un ventilateur d'extraction en sortie du tube.

Pour simplifier la construction du four, les échangeurs thermiques sont symétriquement inversés au niveau des jonctions entre les modules, ce qui permet de regrouper les conduites d'alimentation en gaz 9 et 10 et les conduits d'extraction des gaz brûlés 17, 18, 19 et 20 reliés à des cheminées d'évacuation 22, 23 s'élevant au-dessus de la toiture.

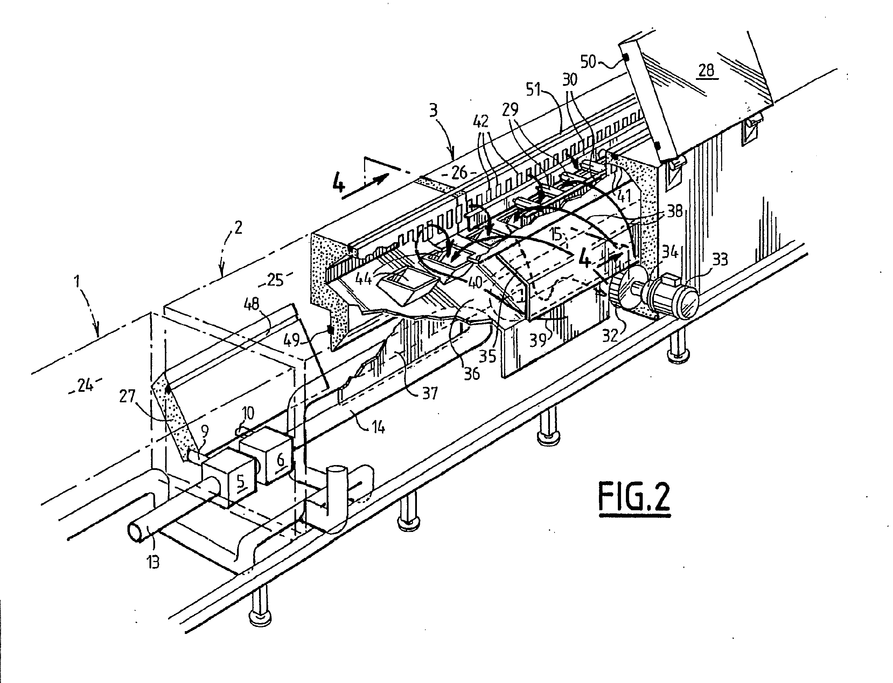

Comme indiqué plus clairement à la figure 2, chaque module comporte une enceinte 24, 25, 26 dans laquelle est monté l'échangeur 13, 14, 15 correspondant.

Chaque enceinte comprend, comme l'enceinte 25 représentée de façon plus détaillée à la figure 2, une porte latérale 27 d'accès en vue de la maintenance du four s'étendant au niveau des échangeurs 13, 14, 15, 16 sur toute la longueur du module.

Elle comporte en outre une porte supérieure 28 d'accès à un tunnel de cuisson dans lequel est disposé un transporteur à rouleaux 29 porté par deux rails 30 et disposé au-dessus de la région de l'échangeur thermique 15.

L'ouverture des portes 28 permet un accès total sur toute la longueur du four facilitant la maintenance de la zone de cuisson (nettoyage ou remplacement d'un tapis ou de rouleaux du convoyeur) et le guidage du produit à cuire lors du lancement d'une campagne de fabrication.

Au lieu d'un transporteur à rouleaux, il est possible d'utiliser un tapis perforé ou grillagé (non représenté).

Dans la paroi de l'enceinte 25 opposée à la porte d'accès de maintenance 27, est disposée une turbine de ventilation 32 entraînée en rotation par un moteur électrique 33 muni d'une turbine de refroidissement 34 destinée à dissiper la chaleur transmise par l'arbre de transmission reliant la turbine de ventilation et le moteur électrique et ayant une extrémité à l'intérieur du four et une extrémité à l'extérieur du four.

Ainsi on évite toute élévation de température excessive du moteur électrique.

La turbine de ventilation 32, avantageusement réalisée en acier inoxydable, est disposée dans la partie basse de la paroi de l'enceinte 26 opposée à la porte 27.

Le nombre et l'emplacement des turbines de ventilation 32 peut varier selon les besoins et la conception d'ensemble du four. Il peut y en avoir une ou plusieurs par module 1, 2, 3, 4.

Grâce à l'extraction centrale des fumées par le dispositif dont on parlera plus loin et à ces turbines 32, on réalise une aspiration d'air extérieur qui pénètre dans le four par l'orifice d'entrée du produit à cuire dans le premier module 1 et par l'orifice du dernier module 4 par lequel le produit cuit sort du four, ainsi que la progression de cet air aspiré en direction de la zone centrale du four.

Entre la turbine 32 et la zone du transporteur à rouleaux sont disposées des tôles de déflexion 35, 36, 37, par exemple en acier inoxydable qui définissent des trajets 38, 39 d'air de chauffage matérialisés par des flèches correspondantes, lesdits trajets 38, 39 aboutissant de part et d'autre du transporteur à rouleaux 29 afin d'assurer un chauffage homogène du produit qu'il transporte et un trajet 40 de retour vers le fond de l'enceinte.

Les trajets d'air de chauffage 38, 39 débouchent sur des grilles latérales 41, 42 disposées de part et d'autre des rouleaux 29, tandis que le trajet de retour 40 est défini par une série de prises d'air 44 situées au-dessous des rouleaux 29.

Les prises d'air 44 traversent le trajet 39 et aboutissent à la base de l'enceinte entre les tôles de déflexion 36 et 37. Grâce à la progression de l'air chaud imposée par les turbines 32, on obtient ainsi une configuration hélicoïdale du trajet de l'air à l'intérieur du four. Au fur et à mesure de sa progression, cet air se charge en gaz divers résultant de la cuisson du produit. Ce sont des gaz que l'on se propose de traiter dans le cadre de l'invention.

Le four peut être muni sur l'une de ses parois latérales d'un orifice 54 débouchant dans un conduit d'évacuation des gaz de cuisson qui y circulent 55. Cet orifice 54 et le conduit d'évacuation correspondant 55 sont très préférentiellement disposés en position centrale par rapport à l'ensemble du four. Si le four comporte un nombre impair de modules, l'orifice 54 et le conduit 55 sont ménagés au milieu du module central. Si le four comporte un nombre pair de modules (comme représenté sur les figures), l'orifice 54 et le conduit 55 sont (comme représenté sur la figure 1) ménagés au niveau du joint d'isolation thermique 65 assurant la liaison entre les deux modules 2, 3 les plus centraux. On peut également, au lieu de cela, prévoir deux orifices 54, ménagés chacun sur l'un des modules 2, 3, près de son extrémité la plus proche du joint séparant les modules, et faire se rejoindre les conduites d'évacuation issues de ces orifices 54 pour former un conduit d'évacuation unique. Si on estime tolérable un léger décentrement de l'évacuation des gaz de cuisson, on peut aussi ne prévoir qu'un seul orifice 54, ménagé sur la paroi d'un des deux modules 2, 3 près de son extrémité la plus proche du milieu du four. Ces deux dernières configurations permettent d'éviter les problèmes d'étanchéité du joint thermique 65 que pourrait poser le fait d'y ménager un orifice 54 et d'y brancher un conduit 55.

Cette disposition centrale de l'évacuation des gaz permet d'assurer une bonne symétrie et une bonne homogénéité du flux d'air de cuisson à l'intérieur du four, ainsi qu'un tirage satisfaisant garantissant de bons échanges thermiques entre l'air destiné à la cuisson et les échangeurs d'une part, et entre l'air destiné à la cuisson et le produit à cuire d'autre part. La configuration hélicoïdale du trajet de l'air de cuisson procurée par les tôles de déflexion 35, 36, 37 et les prises d'air 44, et le tirage assisté par la ou les turbines 32 grâce auquel l'air de cuisson est poussé à suivre ce trajet hélicoïdal, contribuent à l'obtention de ce résultat.

On voit donc que le circuit d'amenée et d'évacuation de l'air de chauffage du produit déplacé sur le transporteur à rouleaux 29 est indépendant du circuit de combustion du gaz dans les brûleurs.

Les parois et les portes de l'enceinte 25 comme celles des autres enceintes sont réalisées en un isolant formé de fibres en céramique à couches croisées disposées entre un revêtement intérieur 31 a en tôle d'acier inoxydable et un revêtement extérieur 31 b en acier peint.

Les portes telles que la porte latérale 27 et la porte supérieure 28 d'accès au tunnel de cuisson sont munies ainsi que leurs encadrements, de joints respectifs 48, 49 et 50, 51 en tresses de fibres réfractaires.

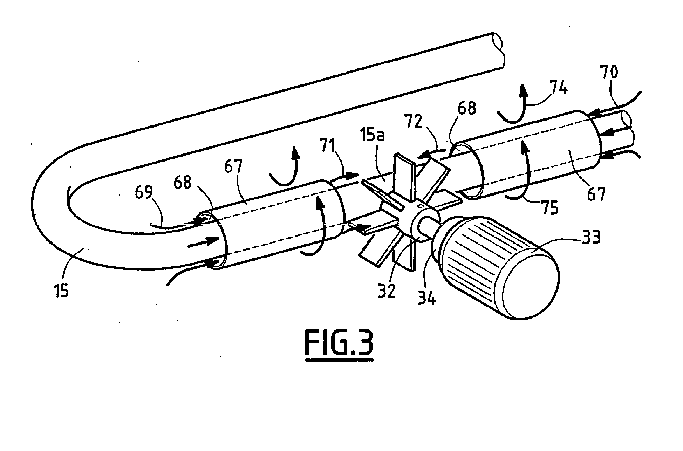

Comme représenté à la figure 3, selon la nature, la quantité et la toxicité des vapeurs de cuisson dégagées par le produit, un dispositif de brûlage 53 peut être installé en option sur un conduit d'évacuation 55. Un brûleur à gaz 57 est placé dans le conduit d'évacuation 55 et projette sa flamme dans le sens du flux. Une cloche 59 vient alors coiffer le conduit d'évacuation au-dessus du brûleur 57 formant ainsi une chambre de chauffe. Les gaz brûlés sont alors collectés autour de cette cloche 59 par une chambre 60 puis aspirés par un ventilateur d'extraction 58 au travers du conduit 61. Un hublot de visite 62 disposé dans la chambre 60 permet de visualiser l'encrassement de celle-ci par des suies ou autres. Le brûleur à gaz 57 doit être capable dé porter les fumées à une température de l'ordre de 1200°C.

Selon la nature et les caractéristiques du produit à cuire, un dispositif de régulation de l'hygrométrie de l'air chaud nécessaire pour la cuisson peut être mis en place pour éviter tout dessèchement du produit à cuire ou pour modifier l'aspect en surface du produit après cuisson (brillance, aspect peau d'orange, etc...). Dès la détection d'un manque d'humidité de l'air de cuisson, une quantité d'eau réglable sera déversée dans un bac 63 posé sur le fond du four. L'évaporation de cette eau viendra alors rétablir la quantité de vapeur d'eau contenue dans l'air de cuisson à un taux d'hygrométrie réglable.

Le fonctionnement du four est le suivant.

Lorsqu'un produit à chauffer est présenté à l'entrée du four, l'opérateur ouvre les portes supérieures 28 d'accès au tunnel de cuisson et l'extrémité avant d'un produit à cuire en continu est placée dans le tunnel de cuisson. Puis, il referme les portes 28.

Le four ayant été au préalable réglé en fonction des paramètres de cuisson du produit à traiter, il est mis en marche et le produit est entraîné dans le transporteur à rouleaux 29 à la vitesse désirée compatible avec le temps de séjour du produit dans le four.

Les brûleurs à gaz 5, 6, 7, 8 chauffent l'air entrant dans les échangeurs thermiques 13, 14, 15, 16. Leurs flammes se propagent dans les tubes en épingle des échangeurs et les gaz brûlés sont évacués par les cheminés 22, 23 (Fig.1) sans qu'il y ait contact avec l'air de chauffage du produit.

Pour chaque module 1 à 4, une turbine 32 aspire l'air chaud devant l'échangeur thermique 15 par son centre et le rejette sur toute sa périphérie. Au lieu d'une turbine 32, on peut en prévoir plusieurs. Le déflecteur 35 sépare alors le flux d'air pulsé en deux veines d'air 38 et 39 de débits identiques.

La veine d'air 38 guidée par les parois 31a et 35 traverse alors les grilles latérales 41 pour diffuser sa chaleur de façon régulière et non brutale dans la zone de cuisson sur toute la longueur coté droit du four.

De même, la veine d'air 39 guidée par les parois 35 et 36 traverse alors les grilles latérales 42 pour diffuser sa chaleur de façon régulière et non brutale dans la zone de cuisson sur toute la longueur coté gauche du four.

De nombreuses prises d'air 44 situées sous le convoyeur 29 unissent alors les veines d'air 38 et 39 en une veine d'air 40 de retour vers l'échangeur thermique 15 pour être à nouveau réchauffée.

Lorsque le four est muni d'un dispositif de brûlage de fumées, une partie du gaz mis en mouvement par les turbines est évacuée de l'enceinte du four par le conduit 54 (Fig.3), les fumées sont brûlées dans le conduit vertical 56 par le brûleur à gaz 57 et évacuées à travers la chicane formée par la cloche 59 et la chambre 60 vers la cheminée 61 avec un débit qui est fonction de la vitesse de rotation du ventilateur 58.

Selon l'invention, le four qui vient d'être décrit comporte également les éléments suivants (non représentés sur les figures 1 et 2).

Dans les zones avoisinant une turbine 32, la branche 15a de l'épingle 15 de l'échangeur thermique qui est la plus proche de la turbine 32 est entourée par une enveloppe 67 qui s'interrompt face à la turbine 32.

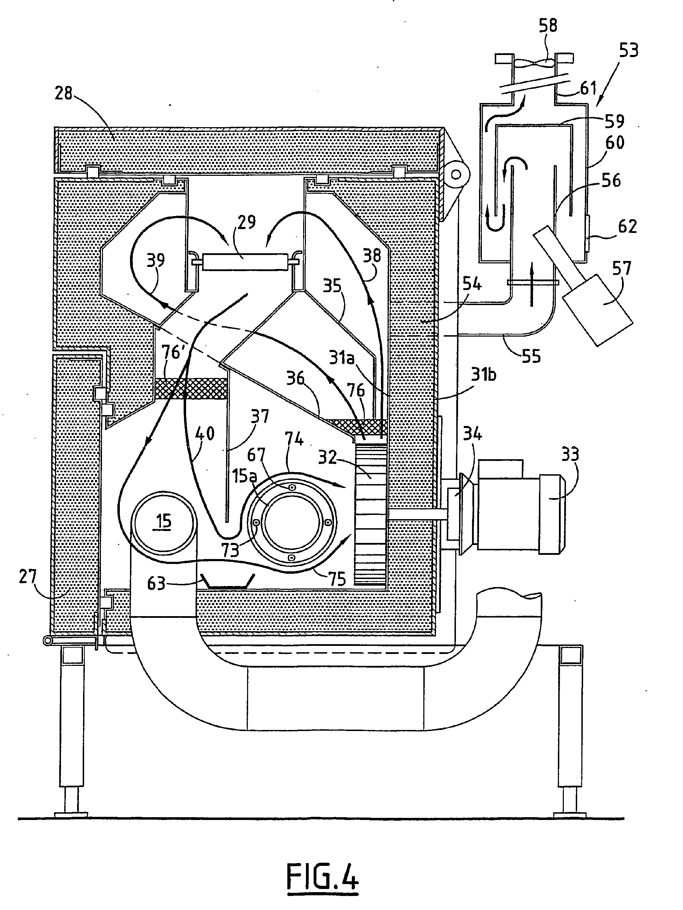

La fonction de cette enveloppe 67 (qui, dans l'exemple représenté, s'étend de part et d'autre de la turbine 32 en s'interrompant face à ladite turbine 32) est de permettre à une fraction des gaz circulant dans le four d'être aspirée dans l'intervalle 68, dont la largeur peut être de l'ordre de 5 à 50mm par exemple, séparant l'enveloppe 67 et la branche 15a de l'épingle 15. Les flèches 69, 70, 71, 72, 73 des figures 3 et 4 mettent en évidence cette circulation.

De cette façon, ladite fraction des gaz circulants chargés en vapeurs de cuisson passe au plus près de l'échangeur 15 et est soumise, dans un espace confiné, à l'intense rayonnement thermique qu'il dégage, cela d'autant plus que la branche 15a la plus proche de la turbine 32 est (dans la construction du four donnée en exemple) la plus proche du brûleur 7, donc la plus chaude.

La turbine 32 créant une dépression dans la zone qui lui fait face et où l'enveloppe 67 est interrompue, on génère alors un tirage naturel entre la branche 15a de l'échangeur 15 et l'enveloppe 67, qui permet à une fraction significative du flux gazeux circulant dans la section du four concernée de passer par l'intervalle 68. L'importance de cette fraction peut être réglée, le cas échéant, par une variation de la vitesse de rotation de la turbine 32 et/ou des distances entre la turbine 32 et les extrémités des deux parties de l'enveloppe 67 si ces parties peuvent être déplacées à la commande, et/ou de la longueur de l'enveloppe 67 s'il est possible de la faire varier au cours de l'utilisation du four (par exemple en lui conférant une forme télescopique et en lui associant des moyens de commande adaptés).

Le restant du flux gazeux circule dans le four en passant au dessus et au dessous de l'enveloppe 67. Celle-ci étant en un matériau conducteur de la chaleur, elle est portée à une température du même ordre de grandeur que celle de l'échangeur 15 et joue aussi un rôle dans l'échauffement des gaz qui la lèchent selon les flèches 74, 75 de la fig.4.

Les conditions thermiques régnant dans l'intervalle 68 sont propices à une pyrolyse des vapeurs dégagées par la cuisson. Cette pyrolyse nécessite des températures de l'ordre de 350 à 800°C, le plus généralement de 400 à 700°C e plus particulièrement de 500 à 600°C, dans le cas des vapeurs issues de la cuisson du caoutchouc.

La cuisson du caoutchouc devant s'effectuer elle-même à une température de l'ordre de 300°C seulement, on comprend qu'il ne serait pas souhaitable de traiter simultanément par pyrolyse l'ensemble du flux gazeux circulant dans le four. En effet, un tel traitement aurait pour conséquence de porter rapidement l'ensemble du flux gazeux à une température dépassant cet ordre de grandeur, donc inadaptée à la cuisson des produits. C'est pour cela qu'on laisse une portion importante du flux gazeux libre de circuler à l'extérieur de l'enveloppe 67 pour être maintenue à la température de cuisson normale des produits. Dans la pratique, l'installation est dimensionnée et régulée en fonctionnement pour qu'environ, par exemple, 20% du flux gazeux total brassé dans la zone du four correspondante passe par l'intervalle 68 et soit soumis à la pyrolyse avant d'être redilué dans le flux principal.

Le four fonctionnant en circuit fermé, au fur et à mesure des multiples passages des effluents gazeux devant un des échangeurs 15, à l'extérieur comme à l'intérieur de l'enveloppe 67, l'ensemble des gaz résultant de la cuisson des produits et susceptibles d'être pyrolysés finit par être traité, sans pour autant qu'une surchauffe excessive des gaz participant à la cuisson soit observée.

Ce sont plus particulièrement les nitrosamines issues de la vulcanisation qui doivent être détruites par la pyrolyse.

Cette pyrolyse, mais aussi la cuisson des produits, génère des effluents polluants qu'il faut détruire avant de rejeter dans l'atmosphère les gaz circulant dans le four. Afin de réaliser cette destruction à l'intérieur même du four, au fur et à mesure de la production de ces effluents, l'invention prévoit que les gaz circulant dans le four passent également à travers au moins un lit catalytique 76, 76'. Ce lit catalytique doit, notamment, être apte à traiter le CO et les oxydes d'azote produits par la vulcanisation des produits en caoutchouc et par la pyrolyse précédemment décrite.

Ce lit catalytique 76, 76' peut être implanté à un endroit quelconque du trajet des effluents gazeux circulant dans le four, par exemple en référence au type de four représenté sur les figures :
- au dessus de la turbine 32 et en dessous du déflecteur 35 de manière à traiter le flux de gaz ascendant avant qu'il ne se sépare en deux veines 38, 39 qui sont orientées de part et d'autre du transporteur à rouleaux 29 ; c'est le cas du lit 76 de la figure 4 ;
- ou sur le trajet de retour 40 vers le fond de l'enceinte des gaz qui ont traversé le transporteur à rouleaux 29 ; c'est le cas du lit 76' de la figure 4 ;
- ou immédiatement en amont de la turbine 32 ;
- ou à tous autres endroits du four par lequel transite un flux de gaz recirculants ;
- ou à plusieurs de ces endroits simultanément.

Typiquement, les catalyseurs du ou des lits catalytiques 76, 76' sont à base d'un ou plusieurs métaux précieux déposés sur différents supports minéraux, typiquement du Césium, du Rhodium, du Platine, du Palladium. Le Platine et le Palladium, et préférentiellement le Palladium, en sont les exemples privilégiés. Les supports peuvent être, des alumines taritées ou non, des kieselghurs divers, des céramiques ou toutes formes chimiques minérales disponibles.

Ces catalyseurs supportés peuvent se présenter sous toutes les diverses formes géométriques possibles, par exemple sous forme de tubes creux perforés ou non de toutes tailles, de tous diamètres et de toutes longueurs avec des perforations de toutes cotes possibles et de toutes formes possibles.

Les catalyseurs sont typiquement, sous formes de poudres et préférentiellement sous formes de billes sphériques de tous diamètres et de toutes caractéristiques spécifiques en terme de porosités, surfaces spécifiques, densités, attritions, et toutes autres caractéristiques des catalyseurs supportés qui les rendent aptes à transformer par catalyse les vapeurs émises lors de la cuisson des produits que le four doit traiter et lors de la pyrolyse de ces vapeurs. La teneur en métaux précieux cités ci-dessus, peut être comprise typiquement entre 0.01 et 5% poids, généralement entre 0.1 et 2% poids et préférentiellement entre 0.3 et 1 % poids.

Le four qui a été décrit et représenté n'est qu'un exemple de mise en oeuvre de l'invention. Il doit être entendu que, notamment, la pyrolyse des effluents gazeux pourrait être assurée par d'autres moyens que l'enveloppe 67 entourant la tranche 15a de l'échangeur 15, en particulier si on utilise un autre type d'échangeur thermique qu'un échangeur en épingle.

Il est préférable que chaque module 1, 2, 3, 4 du four soit équipé de moyens de pyrolyse et de moyens de catalyse, même si, à proprement parler, du fait de la recirculation des gaz à l'intérieur du four, il pourrait éventuellement être suffisant de n'équiper qu'un seul module.

Il doit être entendu que la présence 54, du conduit d'évacuation 55 et des organes qui leur sont associés n'est pas obligatoire.

L'invention est, bien entendu, applicable au cas d'un four qui ne serait composé que d'un seul module.

## Revendications

1. Four de cuisson à gaz en continu, notamment de produits en caoutchouc, comprenant des moyens de chauffage d'une zone de cuisson (29) à travers laquelle le produit à traiter est déplacé, **caractérisé en ce qu'**il est formé d'un module ou de plusieurs modules (1, 2, 3, 4) juxtaposés, intégrés au sein d'une ligne de fabrication et comprenant chacun une enceinte (24, 25, 26), convenablement isolée, un échangeur thermique (13, 14, 15, 16) à brûleur à gaz (5, 6, 7, 8) et des moyens (32, 33, 35, 36, 41, 42) de propulsion et d'acheminement de l'air chauffé par l'échangeur thermique vers une zone de cuisson (29) du produit, le circuit de combustion du gaz de l'échangeur thermique étant séparé du circuit d'air chaud traversant la zone de cuisson, les moyens d'acheminement de l'air chaud également répartis et diffusés par des grilles (41, 42) le long de la zone de cuisson comprenant des trajets (38,39) d'amenée de l'air chaud de deux côtés de la zone de cuisson (29) et un trajet (40) d'évacuation de l'air par le milieu de la zone de cuisson, et **en ce qu'**il comporte également :
- des moyens pour assurer une pyrolyse des effluents gazeux présents dans le circuit d'air chaud et résultant de la cuisson du produit, lesdits moyens traitant une fraction des gaz circulant dans une section du four donnée ;
- et au moins un lit catalytique (76, 76') interposé sur le circuit d'air chaud.

2. Four à gaz selon la revendication 1, **caractérisé en ce que** lesdits moyens pour assurer la pyrolyse des effluents gazeux résultant du produit comportent des moyens de réglage de ladite fraction des gaz traitée par pyrolyse.

3. Four de cuisson suivant l'une des revendications 1 et 2, **caractérisé en ce que** l'échangeur thermique (13,14,15,16) de chaque module de four est un échangeur à tube en épingle chauffé par l'intérieur à l'aide d'un brûleur à gaz correspondant (4,5,6,7) **en ce que** les moyens de propulsion et d'acheminement d'air chaud vers la zone de cuisson de chaque module comportent au moins une turbine de ventilation (32) disposée près du fond de l'enceinte du module en regard de trajets d'acheminement de l'air chaud délimités par des tôles (35,36) de déflexion de l'air chaud pour l'amener de part et d'autre de la zone de cuisson, et des grilles (41,42) de répartition de l'air chaud le long de la zone de cuisson, et **en ce que** lesdits moyens pour assurer une pyrolyse desdits effluents gazeux comportent une enveloppe (67) ouverte à ses deux extrémités entourant ledit tube en épingle (15a), placée au voisinage de ladite turbine, séparée dudit tube par un intervalle (68) et interrompue face à ladite turbine (32).

4. Four selon la revendication 3, **caractérisé en ce que** ladite enveloppe (67) est pourvue de moyens permettant de faire varier sa distance avec la turbine (32).

5. Four selon la revendication 3 ou 4, **caractérisé en ce que** ladite enveloppe (67) est pourvue de moyens permettant de faire varier sa longueur.

6. Four selon l'une des revendications 1 à 5, **caractérisé en ce que** ledit lit catalytique (76, 76') est à base d'un ou plusieurs métaux précieux déposés sur un support minéral.

## Claims

1. Furnace for continuous gas curing, especially of rubber products, comprising means for heating a curing area (29) through which the product to be treated passes, **characterised in that** it is formed by a module or a plurality of juxtaposed modules (1, 2, 3, 4), integrated within a production line and each comprising a suitably insulated housing (24, 25, 26), a heat exchanger (13, 14, 15, 16) with a gas burner (5, 6, 7, 8) and means (32, 33, 35, 36, 41, 42) for propelling and directing air heated by the heat exchanger toward an area (29) for curing of the product, the gas combustion circuit of the heat exchanger being separate from the circuit of hot air flowing through the curing area, the means for directing the hot air also being distributed and set apart by grids (41, 42) along the curing area comprising paths (38, 39) for directing hot air on both sides of the curing area (29) and a path (40) for evacuating the air via the middle of the curing area, and **in that** it also comprises:
- means for pyrolysing gaseous effluents present in the air circuit and resulting from the curing of the product, said means treating a fraction of the gases travelling in a given portion of the furnace;
- and at least one catalytic bed (76, 76') interposed on the hot air circuit.

2. Gas furnace according to claim 1, **characterised in that** said means for pyrolysing the gaseous effluents resulting from the product comprise means for adjusting said fraction of the gases that is treated by pyrolysis.

3. Curing furnace according to either claim 1 or claim 2, **characterised in that** the heat exchanger (13, 14, 15, 16) of each furnace module is an exchanger with a hairpin tube which is internally heated using a corresponding gas burner (4, 5, 6, 7), **in that** the means for propelling and directing hot air toward the curing area of each module comprise at least one ventilation turbine (32) arranged in proximity to the bottom of the housing of the module facing paths for directing hot air which are delimited by metal sheets (35, 36) for deflecting hot air to direct it either side of the curing area, and grids (42, 42) for distributing hot air along the curing area, and **in that** said means for pyrolysing said gaseous effluents comprise a casing (67) which is open at its two ends surrounding said hairpin tube (15a) and is positioned in the vicinity of said turbine, separated from said tube by a gap (68) and terminated facing said turbine (32).

4. Furnace according to claim 3, **characterised in that** said casing (67) is provided with means for varying its distance from the turbine (32).

5. Furnace according to either claim 3 or claim 4, **characterised in that** said casing (67) is provided with means for varying its length.

6. Furnace according to any one of claims 1 to 5, **characterised in that** said catalytic bed (76, 76') is based on one or more precious metals deposited on an inorganic support.

## Patentansprüche

1. Gasdurchlaufofen zur-Wärmebehandlung insbesondere von Kautschuk-Produkten, der aufweist: Mittel für die Beheizung eines Wärmebehandlungsbereichs (29), durch den das zu behandelnde Produkt hindurchbewegt wird, **dadurch gekennzeichnet, dass** er aus einem Modul oder aus mehreren nebeneinanderliegenden Modulen (1, 2, 3, 4) ausgebildet ist, die in eine Fertigungsstraße integriert sind und jeweils aufweisen: eine Wand (24, 25, 26), die entsprechend isoliert ist, einen Wärmetauscher (13, 14, 15, 16) mit einem Gasbrenner (5, 6, 7, 8) und Mittel (32, 33, 35, 36, 41, 42) zum Antreiben und Leiten der durch den Wärmetauscher erwärmten Luft in Richtung zu einem Bereich (29) zur Wärmebehandlung des Produktes, wobei der Gasverbrennungskreislauf des Wärmetauschers von dem Heißluftkreislauf, der den Wärmebehandlungsbereich durchquert, getrennt ist, wobei die Mittel zum Leiten der heißen Luft, die ferner durch Gitter (41, 42) entlang dem Wärmebehandlungsbereich verteilt und verbreitet sind, Wege (38, 39) zum Zuführen der heißen Luft auf beiden Seiten des Wärmebehandlungsbereichs (29) sowie einen Weg (40) für die Ableitung der Luft durch die Mitte des Wärmebehandlungsbereichs aufweisen, und dass er ferner aufweist:
- Mittel zum Sicherstellen einer Pyrolyse der Abgase, die in dem Heißluft-Kreislauf vorhanden und das Ergebnis der Wärmebehandlung des Produktes sind, wobei die Mittel einen Teil der Gase behandeln, die in einem bestimmten Abschnitt des Ofens zirkulieren,
- und mindestens ein auf dem Heißluft-Kreislauf angeordnetes katalytisches Bett (76, 76').

2. Gasofen gemäß Anspruch 1, **dadurch gekennzeichnet, dass** die Mittel zum Sicherstellen der Pyrolyse der Abgase, die aus dem Produkt resultieren, Mittel zum Regulieren des Teils der Gase aufweisen, der mittels Pyrolyse behandelt wird.

3. Wärmebehandlungsofen gemäß einem der Ansprüche 1 und 2, **dadurch gekennzeichnet, dass** der Wärmetauscher (13, 14, 15, 16) von jedem Ofenmodul ein Tauscher mit einem nadelförmigen Rohr ist, der von der Innenseite mit Hilfe eines entsprechenden Gasbrenners (4, 5, 6, 7) beheizt wird, dass die Mittel für das Antreiben und Leiten der heißen Luft in Richtung zu dem Wärmebehandlungsbereich von jedem Modul aufweisen: mindestens eine Lüfterturbine (32), die in der Nähe des Bodens der Wand des Moduls gegenüber von Wegen zum Befördern der heißen Luft angeordnet ist, die durch Bleche (35, 36) zum Ablenken der heißen Luft begrenzt sind, um diese auf beide Seiten des Wärmebehandlungsbereichs zu lenken, und Gitter (41, 42) zum Verteilen der heißen Luft entlang dem Wärmebehandlungsbereich, und dass die Mittel zum Sicherstellen einer Pyrolyse der Abgase eine Hülle (67) aufweisen, die an ihren beiden Enden offen ist, die das nadelförmige Rohr (15a) umgibt, die in der Nähe der Turbine angeordnet ist, die von dem Rohr durch einen Abstand (68) getrennt ist und gegenüber der Turbine (32) unterbrochen ist.

4. Ofen gemäß Anspruch 3, **dadurch gekennzeichnet, dass** die Hülle (67) Mittel aufweist, die ermöglichen, dass ihr Abstand zu der Turbine (32) variiert wird.

5. Ofen gemäß Anspruch 3 oder 4, **dadurch gekennzeichnet, dass** die Hülle (67) Mittel aufweist, die ermöglichen, dass ihre Länge variiert wird.

6. Ofen gemäß einem der Ansprüche 1 bis 5, **dadurch gekennzeichnet, dass** das katalytische Bett (76, 76') auf einem oder mehreren Edelmetallen basiert, die auf einem Mineralträger abgeschieden werden.
